Europäisches Patentamt

European Patent Office

Office européen des brevets

(11) Publication number: **0 278 695**
**A1**

## EUROPEAN PATENT APPLICATION

(21) Application number: 88300985.4

(22) Date of filing: 05.02.88

(51) Int. Cl.⁴: **C08L 79/08** , C08L 29/04 ,
B65D 65/38

(30) Priority: 05.02.87 JP 25238/87

(43) Date of publication of application:
17.08.88 Bulletin 88/33

(84) Designated Contracting States:
DE FR GB NL

(71) Applicant: KUREHA KAGAKU KOGYO
KABUSHIKI KAISHA
1-9-11, Nihonbashi, Horidome-cho
Chuo-ku Tokyo 103(JP)

(72) Inventor: Uehara, Tutomu
4920-1 Oaza Kidamari
Tsuchiura-shi Ibaraki-ken(JP)
Inventor: Ohba, Hiroyuki
3671 Oaza Shimoinayoshi
Chiyoda-mura Niihara-gun Ibaraki-ken(JP)
Inventor: Hisazumi, Nobuyuki
3-11-9 Minato-machi
Tsuchiura-shi Ibaraki-ken(JP)

(74) Representative: Jones, Helen M.M. et al
Gill Jennings & Every 53-64 Chancery Lane
London WC2A 1HN(GB)

(54) Shrinkable film.

(57) Disclosed herein is a shrinkable film comprising a resin composition of 60 to 90% by weight of a polyamide resin of a melting point of 120 to 210°C and a recrystallization temperature of not lower than 50°C, and 10 to 40% by weight of a saponified copolymer of ethylene and vinyl acetate of a melting point of 120 to 200°C and a saponification degree of not less than 95%, and showing an apparent softening initiation temperature of not lower than 30°C and an apparent softening initiation temperature after absorbing water of not higher than 10°C.

EP 0 278 695 A1

## Shrinkable Film

The present invention relates to a shrinkable film comprising a resin composition of a polyamide resin and a saponified copolymer of ethylene and vinyl acetate.

Polyamide resin films have good toughness, cold-resistance, heat-resistance and oil-resistance and so are useful as packaging films. However, the polyamide resin has inadequate stretchability, and its industrial production can be rather inefficient. Moreover, the gas permeability of polyamide resin film can be rather high and so the oxygen gas-barrier property of polyamide resin film can be too low for the film to be used for preserving foods such as raw or processed meats.

Films of a saponified copolymer of ethylene and vinyl acetate have a good oxygen gas-barrier property under a low moisture condition and have good transparency and oil-resistance. However, their cold-resistance and toughness can be inadequate. Also the oxygen permeability can be rather dependent on temperature. As a result the films are not suitable for packaging moisture-containing foods, such as raw meats. Also, the crystallising rate of the film of the saponified copolymer of ethylene and vinyl acetate is too large to produce the film in the amorphous state and so it is very difficult to stretch the film.

In order to avoid the defects of these two types of resins, films comprising a resin mixture of a polyamide resin and a saponified copolymer of ethylene and vinyl acetate have been proposed.

For instance, a film that is an effective gas-barrier and that is shrinkable at low temperatures is obtained by a process comprising blending 40 to 95% by weight of a saponified copolymer of ethylene and vinyl acetate (ethylene content: 20 to 45 mol% and saponification degree: not less than 95%), and 5 to 60% by weight of a polyamide of a melting point of 90 to 180°C, moulding the composition into a sheet-form or a tube-form and then stretching the moulded product (refer to Japanese patent application laid-open (KOKAI) No.54-16576 (1979)). A process for producing polyvinyl alcohol series mouldings comprises mixing 100 parts by weight of a polyvinyl acetate series resin with more than 3 parts by weight and below 100 parts by weight of a polyamide, and heating and melting the thus formed mixture, (refer to Japanese patent publication no.54-7875 (1979)). A resin composition which has high impact strength, is transparent and has low permeability to gaseous oxygen, comprises 50 to 95% by weight of a saponified copolymer of ethylene and vinyl acetate (ethylene content: 10 to 58 mol% and saponification degree: not less than 90%), and 50 to 5% by weight of polyamide (refer to Japanese patent publication No.44-24277 (1969)). A resin composition which has good gas-barrier property, comprises a mixture of a saponified copolymer of ethylene and vinyl acetate (ethylene content: 20 to 80 mol% and saponification degree: not less than 95%), and 5 to 50% by weight of a polyamide (refer to Japanese patent application laid-open no.50-121347 (1975)). A film may be made by (a) preparing a composition comprising about 90 to about 10% by weight of a Nylon resin, about 10 to about 90% by weight of a copolymer of ethylene and vinyl alcohol of a molecular weight of about 15,000 to about 30,000 and a melting point of about 325 to 375°F, and a plasticiser of up to 25% by weight based on the weight of the Nylon resin, the processing temperature of the composition being close to the processing temperature of the copolymer and being lower than the limiting value at which substantial deterioration occurs to the copolymer under the appropriate extruding conditions, (b) heating the thus obtained composition to the processing temperature, (c) extruding the composition through an extruding die to produce a film, (d) adjusting the temperature of the thus extruded film in order to obtain an effective orientation of the film, (e) stretching the thus adjusted film at a temperature at which at least a monoaxial orientation is obtained, and (f) cooling the thus stretched film, thereby obtaining a relatively thin (in thickness) film which has desirable strength, toughness and oxygen gas-barrier property (refer to Japanese patent application laid-open (KOKAI) no.58-36412 (1973)).

When packaging foodstuffs, particularly foodstuffs unstable to heat, thermal deterioration of foodstuff in the package is a potential problem. However, conventional shrinkable film requires heating in order to cause shrinkage, since the film exhibits contraction stress due to the recovery of strain by treatment at high temperature. Suitable heating apparatus includes treatment with hot water or hot air of not lower than 70°C.

Subjecting thermally unstable foodstuffs such as raw meats and dairy products to a conventional temperature for shrinking (not lower than 70°C), tends to cause decolouration, denaturalisation and/or deformation of the foodstuff. A film which shrinks at a temperature lower than the conventional treating temperature would therefore be desirable.

In a first aspect of the present invention, there is provided a shrinkable film comprising a resin composition of 60 to 90% by weight of a polyamide resin of a melting point of 120 to 210°C and a recrystallisation temperature of not lower than 50°C, and 10 to 40% by weight of a saponified copolymer of ethylene and vinyl acetate of a melting point of 120 to 200°C and a saponification degree of not less than 95%, and showing an apparent softening initiation temperature of not lower than 30°C and an apparent softening initiation temperature after absorbing water of not higher than 10°C.

In a second aspect of the present invention, there is provided a shrinkable film comprising

a layer of a resin composition of 60 to 90% by weight of a polyamide resin of a melting point of 120 to 210°C and a recrystallisation temperature of not lower than 50°C, and 10 to 40% by weight of a saponified copolymer of ethylene and vinyl acetate of a melting point of 120 to 200°C and a saponification degree of not less than 95%, and

at least one layer selected from the group consisting of a polyolefin resin, a saponified copolymer of ethylene and vinyl acetate and a polyamide resin,

the film showing an apparent softening initiation temperature of not lower than 30°C and an apparent softening initiation temperature after absorbing water of not higher than 10°C.

Thus the film of the invention comprises a layer of the defined resin composition. The film may be formed only of this composition (e.g., a single layer) or the film may be a laminate with another layer, the laminate then having the defined softening initiation temperatures.

The film of the invention may be made by a process comprising the steps of (1) melt-mixing and extruding a resin composition of 60 to 90% by weight of a polyamide resin of a melting point of 120 to 210°C and of a recrystallisation temperature of not lower than 50°C, and 10 to 40% by weight of a saponified copolymer of ethylene and vinyl acetate of a melting point of 120 to 200°C and a saponification degree of more than 95%, (2) after rapidly cooling the thus extruded tubular film by cold water, substantially immediately removing water attached on the surface of the thus cooled tubular film, thereby forming an amorphous tubular film, (3) then heating the tubular film to a temperature of 55 to 100°C and (4) substantially immediately, biaxially stretching the thus heated tubular film at a bubble pressure of 0.01 to 2.0 kg/cm².

The invention thus provides a film that in use is shrinkable at low temperatures and that can have other very desirable properties, such as good gas impermeability.

The polyamide resin (hereinafter referred to as PA resin) preferably has a melting point of 168 to 205°C.

The resin obtained by partial saponification of a copolymer of ethylene and vinyl acetate, (hereinafter referred to as EVOH resin) preferably has an ethylene content of 10 to 50 mol%, preferably 30 to 48 mol%. Preferably it has a saponification degree not lower than 98%. Preferably it has a melting point of 140 to 190°C.

If the ethylene content is over 50 mol%, the gas-barrier property of the film obtained from such a composition may be less satisfactory and if the ethylene content is below 10 mol%, the melt-processing of such a composition may be more difficult and the moisture-proofness of the film obtained from such a composition may be worse.

In the case where the melting point of EVOH resin is below 120°C, the heat-resistance of the resin is insufficient. If the melting point is over 200°C, a cross-linking reaction is apt to occur during the extrusion moulding of a resin mixture of EVOH resin and PA resin and gel is apt to be formed.

PA resin used in the present invention is a resin showing a melting point of 120 to 210°C, preferably 125 to 205°C and a recrystallization temperature of not lower than 50°C, preferably not lower than 60°C. In the case where the melting point of PA resin is over 210°C, cross-linking reaction is apt to occur at the time of mixing with EVOH resin resulting in gel-forming tendency.

In the case where the melting point of PA resin is below 120°C, the heat-resistance of the resin is insufficient, and such a resin is unsuitable for practical uses.

In the case where the recrystallization temperature of PA resin is below 50°C, crystallization of the resin occurs during the stretching resulting in the deterioration of the stretching film-forming property of the resin.

The melting point is a temperature which shows the maximum value of the melting point curve obtained by measuring 8 to 10 mg of a sample in the heating rate of 20°C/min by using a differential scanning calorimeter (Mettler Co., Ltd., TA-3000).

The recrystallization temperature of PA resin is measured by the following method while using a differential scanning calorimeter (Mettler Co. Ltd., TA-3000).

8 to 10 mg of a specimen of PA resin are heated from 30°C to 230°C in the heating rate of 50°C/min, and the specimen is completely molten by keeping the specimen for 5 min at 230°C. Then the molten specimen is cooled to -50°C in the cooling rate of 50°C/min, and the specimen is completely frozen by keeping the specimen for 5 min at -50°C. The frozen specimen is re-heated to 230°C in the heating rate of 20°C/min. The recrystallization temperature of PA resin is obtained from the differential scanning calorimeter (DSC) curve.

PA resin used in the present invention is preferably the resin having a molecular weight of 15,000 to 45,000 [measured by Gel Permiation Chromatography method (JAPAN Waters Co., Ltd., GPC 150C;

3

Concentration of resin: 300 mg/dl; Solvent: metacresol; and Temperature: 70°C)].

As PA resin used in the present invention, Nylon 6-66, Nylon 6-12 and a mixture thereof, which show the melting point of from 120 to 210°C and the recrystallization temperature of not lower than 50°C, may be exemplified.

Nylon 6-66 of a copolymerization ratio of Nylon 6 to Nylon 66 of 90/10 to 40/60, is preferable and Nylon 6-12 of a copolymerization ratio of Nylon 6 to Nylon 12 of 90/10 to 40/60, is preferable.

In the case of the content of PA resin of the resin composition is over 90% by weight, the stretching film-forming property of the composition is poor (namely, since the bubble pressure of the tubular film becomes higher resulting in the difficulty of the stabilized stretching film-formation and in the formation of unevenness of the width of the film). On the other hand, in the case where the content of PA resin of the resin composition becomes below 60% by weight, since the yield stress becomes higher, the film is apt to burst at the inflation stretching step and also the whitening of the film occurs at the stretching process, thereby deteriorating the appearance of the film.

As the shrinkable film according to the present invention, a film showing the initial stress of not higher than 0.7 kg/mm$^2$ at 25% elongation is favorable.

In the case of the initial stress of above 0.7 kg/mm$^2$ at 25% elongation, since the bubble pressure of the tubular film becomes too high, the streching film-forming property of such a film is apt to be poor.

The initial stress of the film is measured by the following method while using a tensile tester (Orientec Co., Ltd. RTM 100).

The pelletized specimen produced by melt-extruding the mixed resin composition is molded under the conditions of preheating for 2 min and pressurizing (100 kg/cm$^2$) for one minute while using a hot-press molding machine at 210 to 240°C, and then the thus molded material is rapidly cooled in a cold water of 5°C to obtain an amorphous sheet of a thickness of 0.3 mm. The thus obtained amorphous sheet is cut into long strips of 10 mm in width and about 100 mm in length to obtain test pieces. The thus obtained test piece is set on the tensile tester (the distance between the fastners being 52 mm), and the test piece is heated by contacting a metal block heated to 70°C thereto for 5 sec. The thus heated test piece is pulled at a pulling rate of 500 mm/min, thereby obtaining the stress-strain curve (S-S curve). From the thus obtained S-S curve, the initial stress at the elongation of 25% is obtained.

In the case of a laminate sheet, although the test piece can be formed by the above-mentioned hot-press molding method, the test piece is formed by the following method.

Each of resins are melt-extruded from a plurality of extruders, and the thus extruded molten resins are supplied to the T-die, thereby extruding the thus supplied molten resins as a laminate material then the thus obtained laminate material is rapidly cooled in cold water of 5°C to obtain an amorphous laminate sheet of a thickness of 0.3 mm. The thus obtained amorphous laminate sheet is cut into long strips of 10 mm in width and about 100 mm in length to obtain test pieces.

In order to add several functions to the shrinkable film of the present invention, which comprises a resin composition of 60 to 90% by weight of PA resin of the melting point of 120 to 210°C and of the recrystallization temperature of not lower than 50°C and 10 to 40% by weight of EVOH resin of the melting point of 120 to 200°C and the saponification degree of not less than 95%, thermoplastic resin(s) such as polyolefin resin, saponified copolymer of ethylene and vinyl acetate, polyamide resin, etc. may be optionally laminated.

For instance, in the case where moisture-containing foodstuffs are packaged, it is preferable to laminate the thermoplastic resin on the inside (the side contacting with the articles to be packaged) and/or the outside of the film comprising the resin composition of PA resin and EVOH resin, and in the case where foodstuffs not containing moisture are packated, it is preferable to laminate the thermoplastic resin on the inside of the film comprising the resin composition of PA resin and EVOH resin.

As the polyolefin resin to be laminated, a copolymer of ethylene and vinyl acetate, a copolymer of ethylene and acrylic acid, a copolymer of ethylene and an ester of acrylic acid, an ionomer resin, a low density polyethylene, etc. may be exemplified. Further, as the polyamide resin, the polyamide resin showing the melting point of not higher than 210°C are not particularly limited and PA resin used in the resin composition of the present invention is preferable. Furthermore, as the saponified copolymer of ethylene and vinyl acetate, EVOH resin used in the resin composition of the present invention is preferably used.

When laminating the layer of the thermoplastic resin(s) such as a polyolefin resin, a polyamide resin and/or a saponified copolymer of ethylene and vinyl acetate to the layer of the resin composition, it is preferable from the viewpoint of the improvement of the adherence to dispose an adhesive layer between the layer of the resin composition and the layer of the thermoplastic resin to be laminated.

As the adhesive agent, modified polyolefin or copolymerized polyolefin by a carboxylic acid such as

4

fumaric acid, maleic acid, etc. is preferable. As polyolefin, homopolymer of olefin such as ethylene, propylene, etc., copolymer such as copolymer of ethylene and vinyl acetate, copolymer of ethylene and acrylic acid, copolymer of ethylene and ester of methacrylic acid, terpolymer and mixtures thereof may be exemplified.

To the resin composition of 60 to 90% by weight of PA resin and 10 to 40% by weight of EVOH resin according to the present invention, a thermoplastic resin such as polyethylene, modified polyolefin such as maleic acid-grafted polyethylene, copolymer of ethylene and acrylic acid, copolymer of ethylene and methacrylic acid, copolymer of ethylene and vinyl acetate, ionomer and polyamide, and inorganic-and organic additives such as inorganic and organic filler, pigment, etc. may be added within the range of not hindering the object and the effect of the present invention.

In order to produce the shrinkable film according to the present invention, a resin composition 60 to 90% by weight of PA resin and 10 to 40% by weight of EVOH resin is melt-mixed and extruded in a tubular form while using a circular die provided with an extruder. The thus extruded tubular film is (1) immediately chilled by cold water, etc., (2) immediately chilled by a cooling roll, or (3) immediately chilled by a cooling medium other than water, thereby forming a tubular film of a crystallization degree of not more than 13%, preferably not more than 11.5%. In the case of using the cold water, it is necessary to immediately remove water attached on the surface of the tubular film by an air knife or a water-suctioning roll. The temperature of the cold water, the cooling roll and the cooling medium is 0 to 40°C, preferably 0 to 20°C.

Then, the thus obtained tubular film showing a yield stress of a stress-strain curve (S-S curve) of not higher than 1 kg/mm² , preferably not higher than 0.5 kg/mm² under the conditions of 70°C and 5 sec is heated to 30 to 100°C, preferably 50 to 90°C and immediately stretched biaxially in 2 to 5 times, preferably 3.0 to 4.5 times both machine and transverse directions by the inflation method with the bubble pressure of 0.01 to 2.0 kg/cm², preferably 0.02 to 1.0 kg/cm², thereby forming the shrinkable film.

An apparent softening initiation temperature (Ts) of the thus obtained shrinkable film is not lower than 30°C, preferably not lower than 40°C, and Ts of the film after absorbing water is not higher than 10°C, preferably not higher than 0°C. Further, the thermal deformation rate of the thus obtained film under a load of 1 kg/mm² in hot water at 80°C for 10 sec is not more than 50%, preferably not more than 25%.

Still more, the initial stress of the thus obtained film at a 25% elongation is not higher than 0.7 kg/mm², preferably 0.5 kg/mm².

The mixing of PA resin and EVOH resin may be carried out by uniform-mixing of the pellets of PA resin and the pellets of EVOH resin. The thus uniformly mixed pellets may be conveyed immediately to the melt-molding machine, or after melting the thus formed, mixed pellets to form the pellets of the mixed resin, the thus formed pellets of the mixed resin may be conveyed to the melt-molding machine.

As the melt-molding machine used in the present invention, an ordinary extruder for extruding a thermoplastic resin may be mentioned.

At the time when the crystallization degree of the tubular film obtained by chilling the extruded tubular film is over 13%, the film is torn during stretching thereby deteriorating the stretching film-forming property and accordingly the continued production of the film cannot be carried out for a long time.

Further, in the case where the yield stress of the stress-strain curve under the conditions of 70°C and 5 sec is over 1 kg/mm², the stretching film-forming property is deteriorated and accordingly the continued production of the film cannot be carried out for a long time.

It is necessary that water is not attached on the surface of the amorphous film after chilling and on the surface of the stretched shrinkable film. In the case where water is attached on the surface of the film, Ts of the shrinkable film becomes below 30°C and accordingly, the film does not exhibit the shrinkage of the present invention even by treating the film with water at a low temperature.

In the case where the heating temperature of film in stretching is below 30°C, the bubble pressure of the tubular film becomes too high resulting in the deterioration of the stretching film-forming property, and on the other hand, in the case where the heating temperature is over 100°C, the crystallization of the resin proceeds, thereby deteriorating the stretching film-forming property. Furthermore, in the case where the thermal deformation rate is over 50%, the deformation of the packaged articles becomes too large. Such deformed articles are unsuitable as commodities.

By treating the shrinkable film of the present invention with water at low temperatures (water at a temperature of 0 to 60°C, or of 0 to 40°C), the thus treated film shows an excellent shrinkability at low temperatures and an excellent dimensional stability.

The area-shrinkage rate of the film of the present invention when the film is made to contract for 5 min in water at ordinary temperature under a relaxed state is not less than 15%. In the case where the area-shrinkage rate of the film is below 15%, the wrinkles remain on the articles after being packaged, and the clinging property to the articles in comformity becomes insufficient.

It is preferable that the thickness of the shrinkable film according to the present invention is 10 to 120 μm, and it is preferable that the thickness of shrinkable film in which the thermoplastic resin layer(s) is laminated to the resin composition layer of PA resin and EVOH resin is 11 to 220 μm, and the thickness of the thermoplastic resin layer(s) is 1 to 100 μm and is the same as or thinner than the resin composition layer of PA resin and EVOH resin.

The shrinkable film according to the present invention is a film for packaging which is provided with an excellent gas-barriering property, an excellent thermal deformation rate, an excellent stretching film-forming property, an excellent dimensional stability and an excellent shrinkability at low temperature (the property of shrinking at the time when the film is treated with water at low temperature). Furthermore, since the stretchability of the shrinkable film according to the present invention is extremely good, the stretching film-formation thereof can be carried out continuously for a long time under a relatively low pressure in an industrial scale.

The present invention will be explained more concretely while referring to the following Examples, however, the present invention is not limited to the following Examples.

Further, the method for measuring each of the parameters will be shown as follows.

Determination of the crystallization degree:

A specimen obtained by extruding the resin composition at a resin temperature of 230°C and rapidly cooling the thus extruded material is heated while following the DSC temperature-raising method (the heating rate: 20°C/min), and the melting enthalpy ($\Delta H_m^E$) and the crystallization enthalpy ($\Delta H_c^E$) are measured by an ordinary method while using a DSC TA 3000 [differential scanning calorimeter (Mettler Co.,Ltd.)]. Then, the crystallization degree ($X_c$) is obtained according to the following formula:

$$X_c = \frac{\Delta H_m^E - \Delta H_c^E}{\Delta H_m^T},$$

wherein $\Delta H_m^T$ is the theoretical value of the melting enthalpy according to D.W. VAN KREVELEN et al. "PROPERTIES OF POLYMERS" (pages 81 to 98).

Determination of the yield stress:

A specimen obtained by extruding the resin composition at 230°C and rapidly cooling the thus extruded material with water at 17°C is heated to 70°C for 5 sec by the contact-heating method with a hot metal plate, and the yield stress of the specimen of the stress-strain curve at a drawing rate of 500 mm/min is obtained while using a tensilon (Orientec Co., Ltd. RTM-100).

Determination of oxygen gas transmission rate (oxygen gas-barrier property):

The oxygen gas transmission rate of the stretched film is measured by the method described in ASTM-D 3985-81. It is necessary as the gas-barrier shrinkable film that the transmission rate to oxygen is not more than 200 cc/m$^2$.day.atm under the conditions of 30°C and 80% RH.

Determination of the thermal deformation rate:

The thermal deformation rate of the shrinkable film shows the degree of deformation of the film when a sausage, etc. is filled in the tubular film and the thus packaged sausage is cooked while hanging the packaged sausage. The deformation rate of the specimen of 100 mm in the original length and 20 mm in the original width at the time of immersing the packaged film into hot water at 80°C for 10 sec while loading a weight of 1 kg/mm$^2$ to the specimen [machine direction (MD) and transverse direction (TD)] is determined.

Stretchability:

A: The stretching operation of the film can be continuously carried out for not less than 5 hours and accordingly, the film shows an extremely favorable stretchability.

B: The stretching operation of the film can be continuously carried out for not less than one hour and accordingly, the film shows a favorable stretchability.

C: Although the stretching operation of the film can be carried out, there occurs a minute necking on the stretched film and there occurs unevenness of the stretched film. Since the stretching operation of the film cannot be continuously carried out for not less than one hour, the film is not practicable.

D: The stretching operation of the film cannot be carried out because of the occurrence of destruction of the film, or because the film is too hard to be stretched.

Shrinkage:

The shrinkage of the shrinkable film is the mean value of the shrinkage to the original area of the film when 20 pieces of 10 cm × 10 cm both in width and length taken from the shrinkable film are made to shrink for 5 min in water at ordinary temperature (23°C) under a relaxed state.

$$\text{Area shrinkage (\%)} = \frac{\left(\begin{array}{c}\text{Area before}\\ \text{shrinking}\end{array}\right) - \left(\begin{array}{c}\text{Area after}\\ \text{shrinking}\end{array}\right)}{\left(\begin{array}{c}\text{Area before}\\ \text{shrinking}\end{array}\right)} \times 100$$

Apparent softening initiation temperature:

Moisture content of the thus obtained shrinkable film is adjusted by keeping the film in a desiccator containing dry silica gel for 24 hours.

Further, as the specimen for determining the apparent softening initiation temperature after absorbing water, a film which has been immersed in water at 23°C for 5 min in a relaxed state and absorbed water to saturation, is used.

The measurement is carried out by using a dynamic visco-elastometer (Orientec Co., Ltd., REOVIBRON: DDV-II-EP) at a measuring frequency of 110 Hz while heating the specimen at a heating rate of 2°C/min. The apparent softening initiation temperature of the specimen is obtained from the inflection point on the E'-T curve.

EXAMPLES 1 to 3:

A resin composition prepared by mixing a Nylon 6-66 copolymer (Nylon 6 content: 85 % by weight; molecular weight: 36,000; melting point: 200°C and recrystallization temperature: 77.1°C) and a saponified copolymer of ethylene and vinyl acetate (ethylene content: 44 mol%; saponification degree: 98% and melting point: 164°C) in a ratio shown in Table 1 was melt-extruded at a resin temperature of 230°C by a mixing extruder provided with a circular die. After rapidly cooling the thus extruded material with water at 8°C, water attached on the surface of the extruded material was removed by an air knife and an water-suctioning roll to obtain an amorphous tubular film.

After heating the thus obtained tubular film by contacting with a heating roll at 75°C, the thus heated film was inflation-stretched immediately at a stretch ratio of 3.2/4.2 [machine direction (MD)/transverse direction (TD)] under a bubble pressure of 0.1 kg/cm².

The folded width of the thus obtained shrinkable film was 64 mm and the thickness thereof was 30 μm.

The physical properties of the film obtained by rapidly cooling the extruded material and the physical properties of the thus obtained shrinkable film are shown in Table 1.

The shrinkage of the thus obtained shrinkable film was measured by immersing the film for 5 min in water at 23°C. The result is shown also in Table 1.

Further, the shrinkage of the shrinkable film after leaving the film in a container filled with silica gel at ordinary temperature (23°C) for 5 min was 0 % in every case.

## Table 1

| Example | PA resin/EVOH resin [Mixing ratio (by weight)] | Initial stress at 25% elongation $(kg/mm^2)$ | Crystallization degree (%) | Yield stress $(kg/mm^2)$ | Oxygen gas transmission rate $(cc/m^2 \cdot day \cdot atm)$ | Thermal deformation rate (%) (MD/TD) | Apparent softening initiation temperature (°C) | | Stretchability | Area shrinkage (for 5 min in water at 23°C) |
| | | | | | | | After stretching | After absorbing | | |
|---|---|---|---|---|---|---|---|---|---|---|
| Example 1 | 80/20 | 0.27 | 6.3 | 0.25 | 130 | 16/-8 | 60 | -10 | A | 33 |
| Example 2 | 70/30 | 0.31 | 11.3 | 0.23 | 100 | 15/-6 | 62 | -5 | A | 28 |
| Example 3 | 65/35 | 0.24 | 13.0 | 0.21 | 85 | 20/-2 | 63 | 0 | B | 26 |

EXAMPLE 4:

A resin composition prepared by mixing a Nylon 6-66 copolymer (Nylon 6 content: 85% by weight; molecular weight: 36,000; melting point: 200°C and recrystallization temperature: 77.1°C) and a saponified copolymer of ethylene and vinyl acetate (ethylene content: 44 mol%; saponification degree: 98% and melting point: 164°C) in a ratio of 7:3 as an outer layer and a copolymer of ethylene and acrylic acid (acrylic acid content: 6 % by weight) as an inner layer were melt-extruded at the resin temperature of 230°C by a mixing extruder provided with a circular die.

The thus extruded tubular film was subjected to inflation-stretching in the same manner as in Example 1 to obtain a shrinkable film of the folded width of 64 mm and the total thickness of 43 $\mu$m (the thickness of the copolymer of ethylene and acrylic acid as an inner layer: 6 $\mu$m). The physical properties of the thus obtained shrinkable film are shown in Table 2.

Further, the shrinkage of the shrinkable film after leaving the film in a container filled with silica gel at ordinary temperature (23°C) for 5 min was 0 %.

EXAMPLE 5:

In the same manner as in Example 4, a shrinkable film was obtained except for using a Nylon 6-66 copolymer (Nylon 6 content: 85% by weight and melting point: 200°C) as an inner layer instead of the copolymer of ethylene and acrylic acid in Example 4. The folded width of the thus obtained shrinkable film was 64 mm and the total thickness thereof was 50 um (the thickness of the Nylon 6-66 copolymer as an inner layer was 8 $\mu$m.). The physical properties of the thus obtained shrinkable film are shown also in Table 2.

Further, the shrinkage of the shrinkable film after leaving the film in a container filled with silica gel at ordinary temperature (23°C) for 5 min was 0 %.

EXAMPLE 6:

In the same manner as in Example 4, a shrinkable film was obtained except for using a Nylon 6-12 copolymer (Nylon 6 content: 50% by weight and melting point: 130°C) as an inner layer instead of the copolymer of ethylene and acrylic acid in Example 4.

The folded width of the thus obtained shrinkable film was 64 mm and the total thickness thereof was 40 $\mu$m (the thickness of the Nylon 6-12 copolymer as an inner layer was 5 $\mu$m).

The physical properties of the thus obtained shrinkable film are shown also in Table 2.

Further, the shrinkage of the shrinkable film after leaving the film in a container filled with silica gel at ordinary temperature (23°C) for 5 min was 0%.

Table 2

| Example | Material | | Thickness (μm) | | | Oxygen gas transmission rate cc/m$^2$·day·atm | Apparent softening initiation temperature (°C) | | Area shrinkage (for 5 min in water at 23°C) (%) | Initial stress at 25% elongation (kg/mm$^2$) | Yield stress (kg/mm$^2$) | Thermal deformation rate (%) (MD/TD) |
|---|---|---|---|---|---|---|---|---|---|---|---|---|
| | Outer layer [Mixing ratio (by weight)] | Inner layer | Outer layer | Inner layer | Total | | After stretching | After absorbing | | | | |
| Example 4 | PA/EVOH=7/3 | EAA | 37 | 6 | 43 | 56 | 62 | −10 | 41 | 0.33 | 0.32 | 14/−5 |
| Example 5 | PA/EVOH=7/3 | Nylon | 42 | 8 | 50 | 45 | 62 | −10 | 18 | 0.38 | 0.36 | 10/−2 |
| Example 6 | PA/EVOH=7/3 | Nylon | 35 | 5 | 40 | 68 | 62 | −10 | 22 | 0.36. | 0.31 | 12/−3 |

EXAMPLES 7 and 8:

A resin composition prepared by mixing a Nylon 6-12 copolymer (Nylon 6 content: 50% by weight; molecular weight: 19,000; melting point: 130°C and recrystallization temperature: 107.9°C) and a saponified copolymer of ethylene and vinyl acetate (ethylene content: 44 mol%, saponification degree: 98% and melting point: 164°C( in a ratio shown in Table 3 was melt-extruded at a resin temperature of 230°C by a mixing extruder provided with a circular die. After rapidly cooling the thus extruded material by water at 8°C, water adhered to the surface of the thus extruded material was removed by an air knife and a water-suctioning roll to obtain an amorphous tubular film.

After heating the thus obtained tubular film by contacting with a heating roll at 50°C, the thus heated tubular film was immediately subjected to inflation-stretching at a stretching ratio of 3.2/4.2 [machine direction (MD)/transverse direction (TD)] under a bubble pressure of 0.1 kg/cm$^2$.

The folded width of the thus obtained shrinkable film was 64 mm and the thickness thereof was 30 μm.

The physical properties of the film obtained by rapidly cooling the extruded material and those of the shrinkable film are shown in Table 3.

The shrinkage of the thus obtained shrinkable film was measured by immersing the film for 5 min in water at 23°C. The result is shown also in Table 3.

Further, the shrinkage of the shrinkable film after leaving the film in a container filled with silica gel at ordinary temperature (23°C) for 5 min was 0% in every case.

COMPARATIVE EXAMPLE:

A copolymer of vinylidene chloride and vinyl chloride (vinylidene chloride content: 80% by weight) was melt-extruded at a resin temperature of 170°C by a mixing extruder provided with a circular die, and the thus extruded material was rapidly cooled with water at 8°C to obtain an amorphous tubular film.

After heating the thus obtained tubular film by contacting with a heating roll at 23°C, the thus heated tubular film was subjected to inflation-stretching at a stretching ratio of 3/4 [machine direction (MD)-/transverse direction (TD)] under a bubble pressure of 0.05 kg/cm$^2$.

The folded width of the thus obtained shrinkable film was 64 mm and the thickness thereof was 40 μm.

The physical properties of the film obtained by rapidly cooling the extruded material are shown also in Table 3.

The shrinkage of the thus obtained shrinkable film was measured by immersing the film for 5 min in water at 23°C. The result is shown also in Table 3.

Further, the shrinkage of the shrinkable film after leaving the film in a container filled with silica gel at ordinary temperature (23°C) for 5 min was 0%.

Table 3

| Example & Comparative Example | 6-12 PA resin/ EVOH resin [Mixing ratio (by weight)] | Initial stress at 25% elongation (kg/mm$^2$) | Crystallization degree (%) | Yield stress (kg/mm$^2$) | Oxygen gas transmission rate (cc/m$^2$·day·atm) | Thermal deformation rate (%) (MD/TD) | Apparent softening initiation temperature (°C) After stretching | After absorbing | Stretchability | Area shrinkage (for 5 min in water at 23°C) (%) |
|---|---|---|---|---|---|---|---|---|---|---|
| Example 7 | 80/20 | 0.30 | 10 | 0.20 | 130 | 17/1 | 49 | -23 | A | 28 |
| Example 8 | 70/30 | 0.31 | 12 | 0.26 | 100 | 22/21 | 39 | -15 | A | 16 |
| Comparative Example | VD/VC (80/20) | - | 0 | 0.15 | 40 | 22/13 | -23 | -23 | A | 0 |

## Claims

1. A shrinkable film comprising a layer formed of a resin composition of a polyamide resin and a saponified copolymer of ethylene and vinyl acetate, characterised in that the composition comprises 60 to 90% by weight of a polyamide resin of a melting point of 120 to 210°C and a recrystallisation temperature of not lower than 50°C, and 10 to 40% by weight of a saponified copolymer of ethylene and vinyl acetate of a melting point of 120 to 200°C and a saponification degree of not less than 95%, and the film has an apparent softening initiation temperature of not lower than 30°C and an apparent softening initiation temperature after absorbing water of not higher than 10°C.

2. A shrinkable film according to claim 1, wherein the content of ethylene of said saponified copolymer of ethylene and vinyl acetate is 10 to 50 mol%.

3. A shrinkable film according to claim 1, wherein the melting point of said saponified copolyner of ethylene and vinyl acetate is 140 to 190°C.

4. A shrinkable film according to claim 1, wherein the melting point of said polyamide resin is 125 to 205°C and the recrystallisation temperature of said polyamide resin is not lower than 60°C.

5. A shrinkable film according to claim 1, wherein the molecular weight of said polyamide resin is 15,000 to 45,000.

6. A shrinkable film according to claim 1, wherein said polyamide resin is Nylon 6-66, Nylon 6-12 or a mixture thereof.

7. A shrinkable film according to claim 1, wherein the copolymerisation ratio of Nylon 6 to Nylon 66 in said Nylon 6-66 is 90/10 to 40/60, and the copolymerisation ratio of Nylon 6 to Nylon 12 in said Nylon 6-12 is 90/10 to 40/60.

8. A shrinkable film according to claim 1, wherein the initial stress of said shrinkable film at 25%-elongation is not more than 0.7 kg/mm².

9. A film according to any preceding claim and that is formed only from the resin composition.

10. A film according to any of claims 1 to 8 and that is a laminate with at least one layer formed from material selected from polyolefin resins, saponified copolymers of ethylene and vinyl acetate, and polyamide resins.

11. A process for making a film according to any preceding claim and comprising the steps of (1) melt-mixing and extruding a resin composition of 60 to 90% by weight of a polyamide resin of a melting point of 120 to 210°C and of a recrystallisation temperature of not lower than 50°C, and 10 to 40% by weight of a saponified copolymer of ethylene and vinyl acetate of a melting point of 120 to 200°C and a saponification degree of more than 95%, (2) after rapidly cooling the thus extruded tubular film by cold water, substantially immediately removing water attached on the surface of the thus cooled tubular film, thereby forming an amorphous tubular film, (3) then heating the tubular film to a temperature of 55 to 100°C and (4) substantially immediately, biaxially stretching the thus heated tubular film at a bubble pressure of 0.01 to 2.0 kg/cm².

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | EP-A-0 044 484 (BAYER) <br> * Claims * <br> --- | 1-11 | C 08 L 79/08 <br> C 08 L 29/04 <br> B 65 D 65/38 |
| A | GB-A-1 299 006 (BAYER) <br> * Claims * <br> --- | 1-11 | |
| A | CHEMICAL ABSTRACTS, vol. 84, 1976, page 47, abstract no. 32124u, Columbus, Ohio, US; & JP-A-75 121 347 (TOPPAN PRINTING CO., LTD) 23-09-1975 <br> --- | 1-11 | |
| A | CHEMICAL ABSTRACTS, vol. 79, 1973, page 48, abstract no. 6227g, Columbus, Ohio, US; & JP-A-73 10 149 (S. HIRATA et al.) 08-02-1973 <br> ----- | 1-11 | |

TECHNICAL FIELDS
SEARCHED (Int. Cl.4)

C 08 L
B 65 D

The present search report has been drawn up for all claims

| Place of search | Date of completion of the search | Examiner |
|---|---|---|
| THE HAGUE | 02-05-1988 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)